## Europäisches Patentamt

## European Patent Office

## Office européen des brevets

(19)

(11) Veröffentlichungsnummer: **0 221 931**
**B1**

# EUROPÄISCHE PATENTSCHRIFT

(12)

(45) Veröffentlichungstag der Patentschrift:
08.11.89

(21) Anmeldenummer: 86902766.4

(22) Anmeldetag: 06.05.86

(86) Internationale Anmeldenummer:
PCT/AT 86/00039

(87) Internationale Veröffentlichungsnummer:
WO 86/06710 (20.11.86 Gazette 86/25)

(51) Int. Cl.⁴: **C 01 B 15/023**, B 01 J 10/00,
B 01 F 5/04

(54) **VERFAHREN UND VORRICHTUNG ZUR DURCHFÜHRUNG DER OXIDATION IM ANTHRACHINONVERFAHREN ZUR HERSTELLUNG VON WASSERSTOFFPEROXID.**

(30) Priorität: 07.05.85 AT 1361/85

(43) Veröffentlichungstag der Anmeldung:
20.05.87 Patentblatt 87/21

(45) Bekanntmachung des Hinweises auf die Patenterteilung:
08.11.89 Patentblatt 89/45

(84) Benannte Vertragsstaaten:
AT BE CH DE FR GB IT LI LU NL SE

(56) Entgegenhaltungen:
EP-A- 0 111 133
DE-A- 2 003 268
DE-B- 1 212 970
DE-C- 740 674
FR-A- 1 097 506
FR-A- 2 228 717

(73) Patentinhaber: OSTERREICHISCHE CHEMISCHE WERKE GESELLSCHAFT m.b.H., Mariahilfer Gürtel 39, A-1150 Wien (AT)

(72) Erfinder: KEMNADE, Jörg, Altenhainer Str. 21 a, D-6233 Kelkheim (DE)
Erfinder: MAURER, Bernhard, Pestalozzistr. 302, A-9710 Feistritz/Drau (AT)

(74) Vertreter: Pfeifer, Otto, Dipl.-Ing., Patentanwälte Dipl.-Ing. Dr. techn. Schütz, Alfred Dr. phil. Mrazek, Engelbert Dipl.-Ing. Holzer, Walter Dipl.-Ing. Pfeifer, Otto Fleischmanngasse 9, A-1040 Wien (AT)

**Beschreibung**

Das Verfahren zur Herstellung von Wasserstoffperoxid durch Reduktion einer Anthrachinonverbindung und Oxidation der entstandenen Hydrochinonverbindung ist an sich bekannt, s. z.B. ULLMANN, Encyklopädie der technischen Chemie, 4. Auflage, Band 17, S. 697-705, (1979); WINNACKER-KÜCHLER, Chemische Technologie, Band 1, Anorganische Technologie I, S. 529-559.

Bei der technischen Durchführung der Oxidationsstufe ist es wesentlich, daß die nicht augenblicklich verlaufende Oxidation der Hydrochinone so schnell wie möglich erfolgt, damit Veränderungen der Arbeitslösung, die zur Nebenproduktbildung führen, gering gehalten und am besten völlig vermieden werden, s. US-A-2 902 347.

Man war daher bemüht, die Verweilzeit der Arbeitslösung in der Oxidationsstufe so kurz wie möglich zu machen, s.loc. cit..

Nachteilig war hierbei aber einmal, daß durch die notwendige Verweilzeit ein erheblicher Aufwand an Apparaturen durch mehrere hintereinander geschaltete Kolonnen erforderlich wurde, besonders bei Arbeitslösungen mit hohen Gehalten an Tetrahydroanthrahydrochinonderivaten. Außerdem war die Belastbarkeit dieser Kolonnen — es handelte sich um Gegenstromkolonnen — durch eine sehr niedrig liegende Flutgrenze beschränkt, s. DE-A-2 003 268.

Das gleiche gilt für eine Kaskadenanordnung zur mehrstufigen Gleichstromoxidation, bei der aber eine bestimmte Blasengröße für das oxidierende Gas sowie eine niedrige Gasquerschnittsbelastung nicht überschritten werden darf, s. US-A-3 073 680.

Zum besseren Inkontaktbringen der beiden Reaktionskomponenten und damit zu einer Verkürzung der Verweilzeit hatte man auch schon versucht, die Oxidation durch Verwendung von Einbauten oder Füllkörpern in den Reaktoren zu beschleunigen, wie bei der Kaskadenanordnung für Gegenstromführung in der US-A-3 752 885.

Auch bei der Kolonne nach der DE-A-2 003 268, in der Arbeitslösung und oxidierendes Gas in der Gesamtkolonne im Gegenstrom, in Einzelabschnitten oder im Gleichstrom zueinander geführt werden, wurden zur Erhöhung der Durchmischung Einbauten oder Füllkörper eingesetzt, ebenso bei dem in Chem. Process Eng., 40, Nr. 1, 5 (1959) beschriebenen Verfahren.

Ganz abgesehen von den erheblichen Druckverlusten, die durch Einbauten und Füllkörper verursacht werden, können auch die Apparaturen nicht beliebig klein gehalten werden, da die Einbauten und Füllkörper einen gewissen Teil des Reaktionsraumes beanspruchen.

Die Fachwelt hat also ein großes Interesse an einer zwar wirkungsvollen, aber vereinfachten Durchführungsmöglichkeit der Oxidationsstufe im Anthrachinonverfahren.

Aufgabe der Erfindung ist es daher, die Oxidation der hydrierten Arbeitslösung mit einem sauerstoffhaltigen Gas in kürzerer Zeit und unter geringerem technischen Aufwand als bei den bisher bekannten Verfahren durchzuführen, unter größtmöglicher Schonung der Arbeitslösung selbst.

Es wurde gefunden, daß man diese Aufgabe bei der Durchführung der Oxidation im Kreisprozeß zur Herstellung von Wasserstoffperoxid nach dem Anthrachinonverfahren durch Begasung der hydrierten Arbeitslösung mit einem oxidierenden Gas in einem Gleichstromreaktor bei Temperaturen unter 100°C und bei Überdrücken unter 15 bar lösen kann, wenn man die hydrierte Arbeitslösung nach der Hydrierstufe mit einem oxidierenden Gas unter Ausbildung eines koaleszenzgehemmten Systems intensiv mischt, das einen Gasanteil von mindestens 40 Volumsprozent, bevorzugt 50 bis 60 Volumsprozent, besitzt und worin die durchschnittliche Größe der Gasblasen einen Durchmesser von höchstens 2,5 mm, bevorzugt unter 1,5 mm, aufweist, worauf man dieses koaleszenzgehemmte System direkt oder über ein Verteilorgan in den unteren Teil eines rohrförmigen, vorzugsweise einbautenfreien Reaktors einführt, der so dimensioniert ist, daß in ihm ein möglichst vollständiger Umsatz des Sauerstoffs mit dem in der hydrierten Arbeitslösung vorhandenen Hydrochinon möglich ist, wonach man das durchoxidierte Gemisch aus hydrierter Arbeitslösung und oxidierendem Gas in bekannter Weise in Gas und Flüssigkeit trennt.

Koaleszengehemmte Systeme sind bekanntlich solche, in denen die vorhandenen Gasblasen — wenn keine äußere Einwirkung auf das System vorliegt — ihre Größe beibehalten. In diesen Systemen zeichnen sich die Flüssigkeiten durch gewisse, die Grenzfläche beeinflussende Werte, wie z.B. Zähigkeit und spezifische Oberflächenspannung, aus. Durch einen einfachen Vorversuch läßt sich feststellen, ob eine Flüssigkeit mit dem in Frage stehenden Gas ein koaleszenzgehemmtes System bilden kann oder nicht.

Es zeigte sich nun, daß die für das Anthrachinonverfahren verwendeten Arbeitslösungen, bei denen als Chinonlöser Kohlenwasserstoffe oder deren Gemisch eingesetzt werden, für koaleszenzgehemmte Systeme mit Sauerstoff oder Sauerstoff-Stickstoffgemischen — letztere in beliebigen Mischungsverhältnissen — dann in Frage kommen, wenn der Summenquotient aller Grenzflächenspannungen der beteiligten Komponenten mindestens den Wert 16 dyn/cm erreicht. Bevorzugt sind Werte von 17 bis 25 dyn/cm. Häufig verwendete Kohlenwasserstoffe sind z.B. Methylnapthalin, Dimethylnaphthalin, Benzol, Trimethylbenzol, tert.-Butylbenzol, Aromatenbenzin der Siedelage von ca. 185 bis 205°C, außerdem Diphenyl, o-Dichlorbenzol. Auch die neuerdings eingesetzten tetrasubstituierten Harnstoffe können als Bestandteile der Arbeitslösung anwesend sein.

Zur Herstellung von Gasblasen mit einem durchschnittlichen Durchmesser von höchstens 2,5 mm, bevorzugt aber unter 1,5 mm, können Siebplatten oder Fritten, deren Öffnungen in ihrer Größe dem gewünschten Blasendurchmesser angepaßt sind, verwendet werden.

Als besonders geeignet hat sich jedoch eine an sich bekannte Vorrichtung erwiesen, die aus einem Rohr besteht, dessen anfängliche Rohrnennweite sich zu einer Kehle verengt und anschließend wieder die gleiche oder eine andere Nennweite erreicht. Diese Art Vorrichtungen verursachen einen geringen Druckverlust.

In diese Vorrichtung werden die hydrierte Arbeitslösung und das oxidierende Gas entweder gemeinsam oder getrennt, aber dann im Gleichstrom, an der der Hydrierstufe zugewandten Seite eingeführt. Vor Eintritt in die Kehle beginnt schon die Vermischung von Arbeitslösung und Gas. Die intensive Vermischung wird durch das Hindurchströmen durch die Kehle erreicht. Es entsteht ein koaleszenzgehemmtes System mit engem Spektrum der Durchmesser der Gasblasen. Auf dieses Spektrum hat die Größe der Kehle in Abhängigkeit vom durchgesetzten Volumenstrom einen Einfluß.

Der Blasendurchmesser ist vom Energieeintrag und dieser wiederum vom Druckverlust und vom Volumendurchsatz abhängig. Der nötige Druckverlust bei gegebenem Durchsatz wird durch die Wahl der Kehlennennweite festgelegt.

Im System der Arbeitslösung aus 2-Ethyltetrahydroanthrachinon, Ethylanthrachinon, Aromatobenzin der Siedelage von 185 bis 205°C und Triethylhexylphosphat und Luft liegt der Blasendurchmesser im allgemeinen bei ca. 0,5 mm.

Als oxidierende Gase kommen beliebige Sauerstoff-Stickstoffgemische in Frage, auch reiner Sauerstoff. Bevorzugt wird aber Luft verwendet.

Das erfindungsgemäß erhaltene koaleszenzgehemmte System aus hydrierter Arbeitslösung und oxidierendem Gas wird über ein Verteilerorgan in einen rohrförmigen Reaktor eingeführt. Das Mischorgan zu seiner Herstellung kann an diesem Reaktor direkt an dessen Boden oder in der Nähe des Bodens in der Seitenwand angebracht sein; es kann aber auch getrennt von dem Reaktor stehend oder liegend angeordnet und mit ihm durch eine Leitung verbunden werden.

In jedem Fall tritt das koaleszenzgehemmte System in den unteren Teil des Reaktors ein, gegebenenfalls über einen Verteiler. Dieser Verteiler, vorzugsweise in Ringform, ist so konstruiert, daß er den Querschnitt des Reaktors gleichmäßig mit dem Gemisch aus hydrierter Arbeitslösung und oxidierendem Gas beaufschlagt. Je größer der Querschnitt des Reaktors ist, desto mehr Sorgfalt muß auf die gleichmäßige Verteilung gelegt werden. Selbstverständlich werden im Rahmen dieser Erfindung unter «Verteiler» keine Einleitungsorgane verstanden, die auf die Gasblasen koaleszierend wirken können, wie z.B. Siebböden. Die Öffnungen des Verteilers müssen daher so dimensioniert und angeordnet sein, daß das Gemisch nicht getrennt, sondern gleichmäßig — auch bei hohem Durchsatz — über den Reaktorquerschnitt verteilt wird. Der rohrförmige Reaktor selbst ist in seinem Reaktionsraum, bis auf gegebenenfalls den Verteiler, frei von jeglichen Einbauten, d.h. leer.

Der Reaktor ist so dimensioniert, daß der Oxidationsgrad, bezogen auf das vorhandene Hydrochinon, bei mindestens 90%, bevorzugt aber bei mindestens 98%, liegt, bevor die gashaltige Arbeitslösung in einen Flüssigkeits-Gas-Abscheider eintritt. Es zeigte sich, daß ein Reaktionsraum von 8 bis 30 m Höhe innerhalb des Reaktors die vorstehende Forderung erfüllt.

Auf die gleichmäßige Verteilung des koaleszenzgehemmten Gemisches über den gesamten Querschnitt des Reaktors muß besonders bei größeren Durchmessern ab 0,5 m und besonders dort, wo das Mischorgan außerhalb des Reaktors angebracht ist, geachtet werden.

Die Oxidationsreaktion selbst findet bei Drucken von 1 bis nahezu 15 bar statt, bevorzugt bei 2 bis 5 bar. Die geeignetsten Temperaturen sind 30 bis 80°C.

Nach Durchführung der Oxidation werden Arbeitslösung und Restgas, das bei Verwendung von Stickstoff-Sauerstoffmischungen, vor allem von Luft, hauptsächlich aus dem nicht reaktionsfähigen Stickstoff besteht, einem an sich üblichen Flüssigkeits-Gas-Abscheider, z.B. einem Zentrifugalabscheider, zugeführt und in an sich bekannter Weise voneinander getrennt. Dieser Gasabscheider kann sich im Oberteil des Reaktors im Anschluß an den eigentlichen Reaktionsraum oder aber außerhalb des Reaktors befinden und mit ihm durch eine Leitung verbunden sein.

Das abgetrennte Gas kann über eine Aktivkohle-Einheit entsorgt werden. Die oxidierte Arbeitslösung wird weiter zur Extraktion geleitet.

In den beigeschlossenen Zeichnungen wird die Erfindung bzw. der bekannte Stand der Technik näher erläutert. In Fig. 1 ist das erfindungsgemäß zum Einsatz gelangende Mischorgan dargestellt. Fig. 2 zeigt die verschiedenen erfindungsgemäßen Kombinationsmöglichkeiten von Mischorgan, Verteiler und Reaktor. Fig. 3 stellt den aus der DE-AS-2 003 268 bekannten Oxidationsturm vor und Fig. 4 zeigt eine zur Durchführung des erfindungsgemäßen Verfahrens besonders geeignete Vorrichtung.

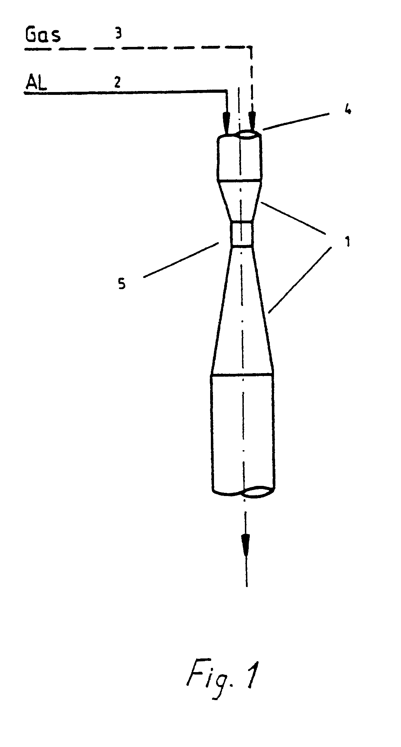

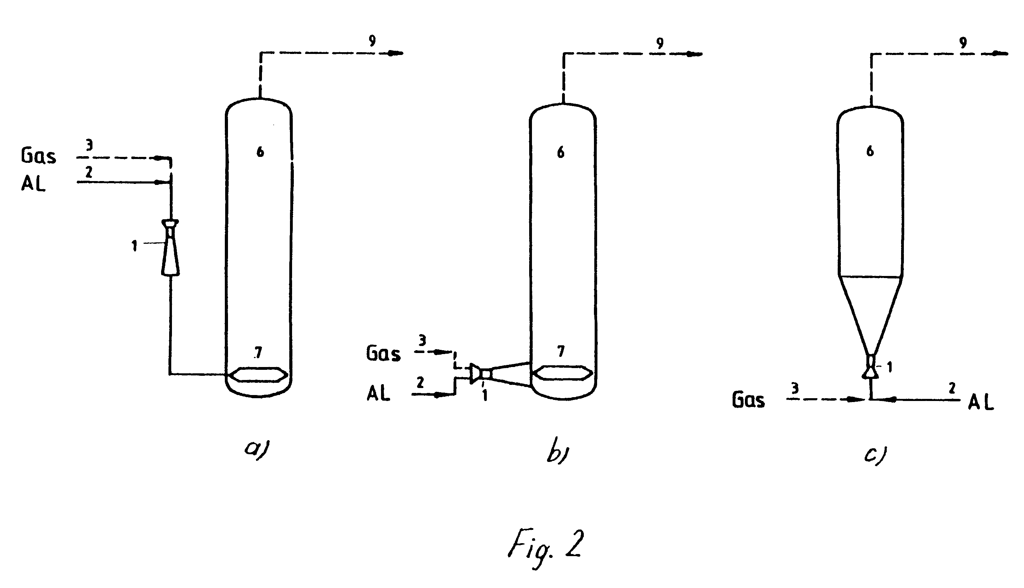

In Fig. 1 werden in das Mischorgan 1 über die Leitung 2 die hydrierte Arbeitslösung (AL) und über die Leitung 3 das oxidierende Gas bei 4 eingeführt. Nach Durchströmen des oberen Teils des Mischorgans 1 tritt das Gas-Flüssigkeitsgemisch in die Kehle 5 ein, wo eine besonders intensive Durchmischung und Zerteilung des Gases in Bläschen mit einem Durchmesser von höchstens 2,5 mm, bevorzugt wesentlich kleiner, stattfindet. Es entsteht hier die für die Oxidation notwendige sehr große Austauschfläche, und zwar in einem koaleszenzgehemmten System. Dieses koaleszenzgehemmte Gemisch wird nun in den leeren Reaktor 6 gemäß Fig. 2 übergeführt, und zwar über einen Verteiler 7 [Ausführungsformen a) und b) gemäß Fig. 2] bzw. direkt bei Anordnung des Mischorgans 1 am Boden des Reaktors 6 [Ausführungsform c) gemäß Fig. 2].

Die technischen Vorteile des erfindungsgemäßen Verfahrens gegenüber den bekannten Durchführungen der Oxidationsstufe im Anthrachinonverfahren liegen in der sehr feinen Verteilung des oxidierenden Gases in der Arbeitslösung sowie in der Tatsache, daß die so hergestellte große Austauschfläche während der Überführung in den Reaktor und während der Reaktion erhalten bleibt, da ein koaleszenzgehemmtes System vorliegt.

Diese Möglichkeit stellt eine neue Durchführungsform der Oxidation im Anthrachinonverfahren dar. Durch die große Austauschfläche ist die Reaktionsgeschwindigkeit stark erhöht, so daß mindestens die gleichen Oxidationsgrade wie bisher, wenn nicht sogar höhere Grade bis herauf zu praktisch 100% erreicht werden und das in kürzerer Verweilzeit des zu oxidierenden Gemisches als bisher. Die Oxidationsreaktoren können somit kleiner ausgelegt werden, weil die Apparateausbeute erhöht wird und weil volumenintensive Einbauten, wie Füllkörper, überflüssig sind. Gleichzeitig sinken die Mengen an Neben- und Abbauprodukten auf ein Minimum, d.h., die Arbeitslösung wird geschont.

Da außerdem bei der Verteilung des koaleszenzgehemmten Gemisches darauf geachtet wird, daß diese gleichmäßig über den gesamten Reaktionsquerschnitt erfolgt, werden Rückvermischungen praktisch vermieden. Aufgrund des völlig einbautenfreien Reaktionsraumes in dem Reaktor können höhere Querschnittsbelastungen erfolgen. So wurden z.B. bei Verwendung von Luft als oxidierendes Gas Querschnittsbelastungen für Gas von 2000 bis 3000 Normalkubikmeter/m²h erzielt. Die entsprechende Flüssigkeitsbelastung lag bei 40 bis 60 Kubikmeter/m²h.

Da sowohl das Mischorgan als auch der Gemischverteiler druckverlustarme Apparaturen darstellen und durch den völlig einbautenfreien Reaktionsraum ebenfalls kaum ein Druckverlust entsteht, stellt die Apparatenordnung aus Mischorgan, Verteiler und Reaktor als Ganzes ein System mit ein einem sehr geringen Druckverlust dar. Der Energiebedarf für diese Oxidationsapparatur ist gegenüber bisher bekannten Vorrichtungen deutlich niedriger.

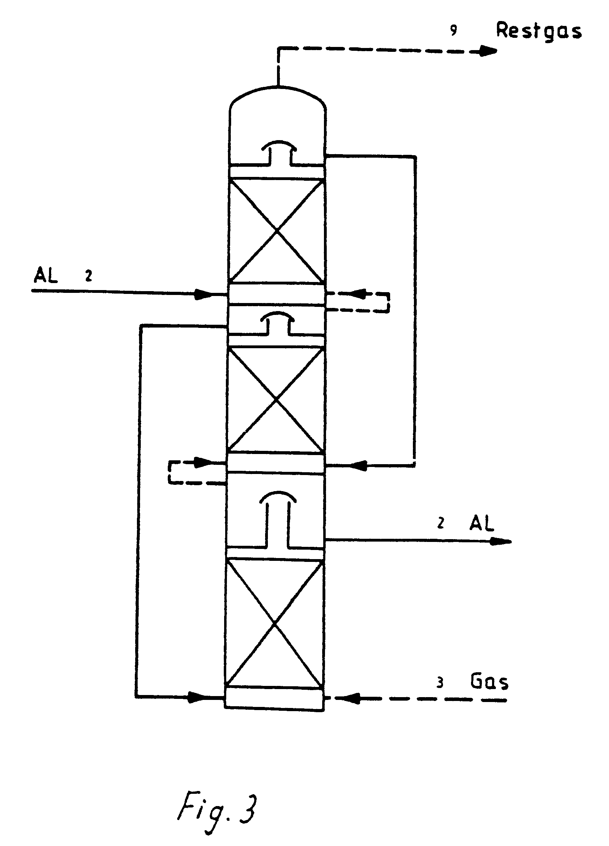

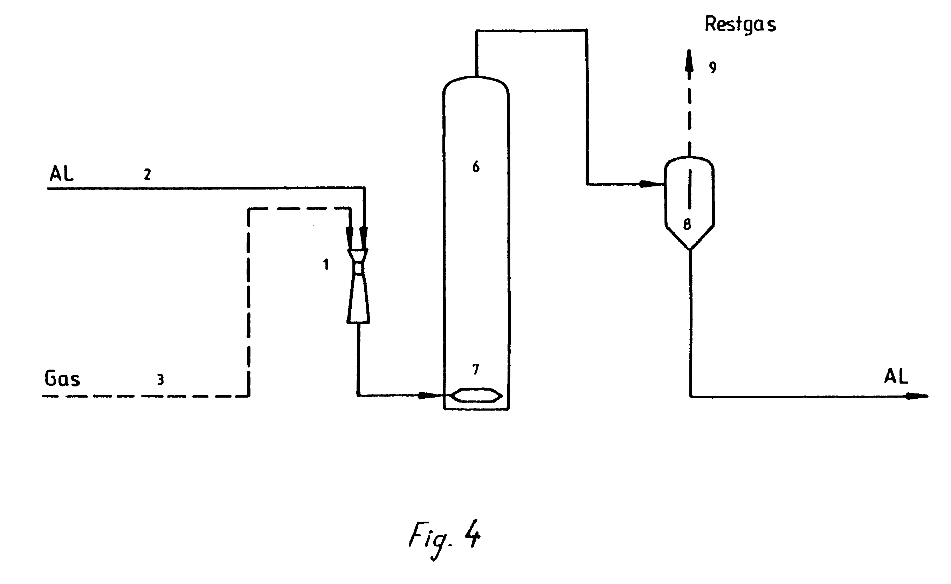

Die Erfindung wird in dem folgenden Beispiel näher erläutert, wobei einer erfindungsgemäß ausgebildeten Vorrichtung (entsprechend Fig. 4) eine dreistufige Reaktorkaskade gemäß der DE-AS-2 003 268 (entsprechend Fig. 3) gegenübergestellt wird.

a) bekannte Arbeitsweise

260 Kubikmeter/h einer Arbeitslösung mit einem $H_2O_2$-Äquivalent von etwa 9,45 kg/m³ wurden zusammen mit 10 000 Normalkubikmeter Luft/h durch einen Oxidationsturm gemäß Fig. 3 geleitet. Dieser Turm hatte einen Durchmesser von 3,7 m und war in drei Sektionen unterteilt, die zusammen eine wirksame Höhe von 15 m hatten. Bei 2,5 bar am Kolonnenkopf und 4,0 bar am Kolonnensumpf und einer mittleren Temperatur von 54°C wurde eine 98,3%ige Durchoxidation erzielt. Der $O_2$-Gehalt im Restgas lag unter 5,9 Vol.-% und der Strombedarf für den Luftverdichter betrug 0,36 kWh/kg $H_2O_2$.

Hieraus ergibt sich eine Arbeitslösung-Querschnittsbelastung von 24 Kubikmeter/m²h und eine Luft-Querschnittsbelastung von 930 Normalkubikmeter/m²h. Die Raum-Zeit-Ausbeute beträgt ca. 15 kg/m³h.

b) erfindungsgemäße Arbeitsweise

345 Kubikmeter/h einer Arbeitslösung mit einem $H_2O_2$-Äquivalent von etwa 11,4 kg/m³ wurden zusammen mit ca. 16 300 Normalkubikmeter Luft/h durch das Mischorgan 1 und den Verteiler 7 in den Oxidationsturm 6 gemäß Fig. 4 geleitet. Dieser Turm hatte einen Durchmesser von 3,8 m und eine wirksame Höhe von 16 m. Bei 2,6 bar am Kolonnenkopf, 3,3 bar am Kolonnensumpf und einer mittleren Temperatur von 53°C wurde eine 99%ige Durchoxidation erzielt. Der $O_2$-Gehalt im Abgas lag um 6 Vol.-%.

Die Querschnittsbelastung für Arbeitslösung beträgt demnach zirka 31 Kubikmeter/m²h und für Luft 1440 Normalkubikmeter/m²h. Die Raum-Zeit-Ausbeute beläuft sich auf 22 kg/m³h. Der spezifische Strombedarf wurde mit 0,26 kWh/kg $H_2O_2$ bestimmt und liegt damit um 28% günstiger als der Energiebedarf der Gegenstromkaskade. In diesem Versuch ist es auch gelungen, die Verweilzeit auf ca. 14 Minuten zu verkürzen.

**Patentansprüche**

1. Verfahren zur Durchführung der Oxidation im Kreisprozeß zur Herstellung von Wasserstoffperoxid nach dem Anthrachinonverfahren durch Begasung der hydrierten Arbeitslösung mit einem oxidierenden Gas in einem Gleichstromreaktor bei Temperaturen unter 100°C und bei Überdrucken unter 15 bar unter Erhöhung der Reaktionsgeschwindigkeit in der Oxidationsstufe, dadurch gekennzeichnet, daß man die hydrierte Arbeitslösung nach der Hydrierstufe mit einem oxidierenden Gas in der Weise intensiv mischt, daß ein koaleszenzgehemmtes System entsteht, das einen Gasanteil von mindestens 40 Volumsprozent, bevorzugt 50 bis 60 Volumsprozent, enthält und worin die durchschnittliche Größe der Gasblasen einen Durchmesser von höchstens 2,5 mm, bevorzugt unter 1,5 mm, aufweist, worauf man dieses koaleszenzgehemmte System über ein Verteilerorgan oder direkt in den unteren Teil eines rohrförmigen Reaktors einführt, der so dimensioniert ist, daß in ihm ein möglichst vollständiger Umsatz des Sauerstoffes mit dem in der hydrierten Arbeitslösung vorhandenen Hydrochinon möglich ist und dessen Reaktionraum — bis auf gegebenenfalls das Verteilerorgan — frei von Einbauten ist, wonach man das durchoxidierte Gemisch aus hydrierter Arbeitslösung und oxidierendem Gas in bekannter Weise in Gas und Flüssigkeit trennt.

2. Verfahren nach Anspruch 1, dadurch gekennzeichnet, daß man zum intensiven Mischen die hydrierte Arbeitslösung und das oxidierende Gas gemeinsam in ein Rohr einführt, dessen anfängliche Rohrnennweite zu einer Kehle verengt und daran anschließend wieder auf die gleiche oder eine andere Nennweite erweitert ist.

3. Verfahren nach Anspruch 2, dadurch gekennzeichnet, daß man die hydrierte Arbeitslösung und das oxidierende Gas im Gleichstrom in das Rohr einführt und den Blasendurchmesser in Abhängigkeit von der Nennweite der Kehle, der eingetragenen Energie und dem Volumenstrom derartig einstellt, daß der Durchmesser der Blasen höchstens 2,5 mm beträgt.

4. Verfahren nach den Ansprüchen 1 bis 3, dadurch gekennzeichnet, daß man als koaleszenzgehemmtes System aus Arbeitslösung und oxidierendem Gas solche Systeme einsetzt, deren Summenquotient aller spezifischen Grenzflächenspannungen der am System beteiligten Komponenten mindestens den Wert 16 dyn/cm (16 mN/m) erreicht.

5. Verfahren nach Anspruch 4, dadurch gekennzeichnet, daß man als koaleszenzgehemmte Systeme solche einsetzt, deren Summenquotient aller Grenzflächenspannungen die Werte 17 bis 25 dyn/cm (17-25 mN/m) aufweist.

**Claims**

1. A process for conducting oxidation in the cyclic process for the preparation of hydrogen peroxide according to the anthraquinone process, by gasification of the hydrogenated working solution with an oxidising gas in a co-current reactor at temperatures below 100°C and at over-pressures below 15 bar, and increasing the rate of reaction in the oxidation step, characterised in that the hydrogenated working solution, after the hydrogenation stage, is intensively mixed with an oxidising gas in such a manner that a non-coalescing system is obtained, having a gas content of at least 40% by volume, preferably from 50 to 60% by volume, and wherein the average diameter of the gas bubbles is no more than 2,5 mm, preferably less than 1,5 mm, whereupon said non-coalescing system is introduced via a distributor or directly into the lower part of a tubular reactor which has dimensions such that complete reaction of the oxygen with the hydroquinone in the hydrogenated working solution is rendered possible and the reaction volume (apart from any distributor) is free of internal structures, whereupon the oxidised mixture of hydrogenated working solution and oxidising gas is separated into gas and liquid in known manner.

2. A process according to claim 1, in which, for the intensive mixing, the hydrogenated working solution and the oxidising gas are introduced together into a tube whose initial tube nominal width narrows to a channel and then broadens again, to the same or a different nominal width.

3. A process according to claim 2, in which the hydrogenated working solution and the oxidising gas are introduced in co-current flow into the tube, and the bubble diameter, in dependence on the nominal width of the channel, the energy input and the volume stream, is so arranged that the diameter of the bubbles is no more than 2,5 mm.

4. A process according to any of claims 1 to 3, in which the non-coalescing system of working solution and oxidising gas is such that the total quotient all specific surface tensions of the individual components in the system is at least 16 dyn/cm (16 mN/m).

5. A process according to claim 4, in which the non-coalescing system is such that the total quotient of all surface tensions is from 17 to 25 dyn/cm (17-25mN/m).

**Revendications**

1. Procédé pour l'exécution de l'oxydation en procédé cyclique pour la fabrication du peroxyde d'hydrogène suivant le procédé à l'anthraquinone par barbotage d'un gaz oxydant dans la solution de travail hydrogénée dans un réacteur à co-courant à des températures inférieures à 100°C et sous des surpressions inférieures à 15 bars, avec augmentation de la vitesse de réaction au stade d'oxydation, caractérisé en ce qu'on mélange intensivement la solution de travail hydrogénée, après le stade d'hydrogénation, avec un gaz oxydant de façon qu'il se forme un système à coalescence freinée qui contient une proportion de gaz d'au moins 40% en volume et de préférence de 50 à 60% en volume et dans lequel la grosseur moyenne des bulles de gaz a un diamètre de 2,5 mm au maximum et de préférence de moins de 1,5 mm, après quoi on transfère ce systeme à coalescence freinée, par l'intermédiaire d'un organe de distribution ou bien directement, dans la partie inférieure d'un réacteur tubulaire qui est dimensionné de façon qu'une réaction aussi complète que possible de l'oxygène avec l'hydroquinone en présence dans la solution de travail hydrogénée y soit possible et dont l'espace de réaction, — à l'exeption éventuellement de l'organe de distribution — est exempt de chicanes, après quoi on sépare le mélange oxydé de solution de travail hydrogénée et de gaz oxydant de façon connue en gaz et en liquide.

2. Procédé suivant la revendication 1, caractérisé en ce qu'en vue du mélange intensif, on introduit la solution de travail hydrogénée et le gaz oxydant conjointement dans un tube dont le diamètre nominal initial diminue en un étranglement et augmente ensuite à nouveau jusqu'à un diamètre nominal égal ou différent.

3. Procédé suivant la revendication 2, caractérisé en ce qu'on introduit la solution de travail hydrogénée et le gaz oxydant à co-courant dans le tube et on règle le diamètre des bulles en fonction du diamètre nominal de l'étranglement, de l'énergie apportée et du débit volumique de façon que le diamètre des bulles soit de 2,5 mm au maximum.

4. Procédé suivant l'une quelconque des renvendications 1 à 3, caractérisé en ce qu'on utilise comme systèmes de solution de travail et de gaz oxydant à coalescence freinée des systèmes dont le quotient cumulatif de toutes les tensions superficielles spécifiques des composantes participant au système atteint au moins la valeur de 16 dynes/cm (16 mN/m).

5. Procédé suivant la revendication 4, caractérisé en ce qu'on utilise comme systèmes à coalescence freinée des systèmes dont le quotient cumulatif de toutes les tensions superficielles présente une valeur de 17 à 25 dynes/cm (17 à 25 mN/m).

Gas ___ 3

AL ___ 2

Fig. 1

Fig. 2

Fig. 3

Fig. 4